# EUROPEAN PATENT APPLICATION

(11) **EP 1 331 207 A1**
(43) Date of publication of application: **30.07.2003**
(21) Application number: 02001578.0
(22) Date of filing: 23.01.2002
(51) Int. Cl.: C03C 8/02, C03C 8/06, C03C 8/08

(54) **Particular compositions of porcelain enamels**

(71) Applicant: Pemco Brugge N.V., 8000 Brugge (BE)
(72) Inventor: Leveaux Marc, 59110 La Madelaine (FR); Crevits Nancy, 8380 Dudzele (BE); Sébastien Humez, 59290 Wasquehal (FR)
(74) Representative: Jönsson, Hans-Peter, Dr.Dipl.-Chem.

(57) **Abstract**

The present invention relates to particular compositions of porcelain enamels containing Bismuth trioxide for the enamelling of aluminium, aluminium alloys surfaces, including aluminized steel, providing high glossy, transparent, mechanically and chemically resistant porcelain enamel coatings.

## Description

### Field

The present invention relates to particular compositions of porcelain enamels containing Bismuth trioxide for the enamelling of aluminium, aluminium alloys surfaces, including aluminized steel, providing high glossy, transparent, mechanically and chemically resistant porcelain enamel coatings.

### Background

The enamelling of aluminium alloys surfaces is a well-known process used on industrial scale for about 50 years (PEI Bulletin P403, 1970; Über die Emaillierung von Aluminium. Mitteilungen VDEFa, Band 10, Heft 2, 1962; Handbook for Bayer Enamels; H. Piera, Galvano organo traitement de Surfaces, n°624, 03-1992).

Many different compositions have been described and patented (DE 35 16 009 A1; XP 002006155; Chemical Abstracts, Vol. 95, n°20, 1981 absn° 174228; DE 22 44 067 A; DE 21 19 777 A; XP 002006154; SU A 510-448; Chemical Abstracts Vol. 85, n°6, 1976, abs n°36671) used as single coat layers onto various aluminium alloys substrate, as well as double coat layers according to the process called "two coats-one fire" (EP 0 686 609 A1; EP 1 103 529 A1). Historically were invented and described, first, lead bearing systems (Handbook of Bayer Enamels; US 2,467,114; Dietzel, Die Emaillierung). Since 1970, V₂O₅ bearing systems (DE 22 44 067 A; DE 21 19 777 A) are still used today.

Also, many different systems like self opacified frits (EP 0 950 644 A1; US 5,650,364 A) or particular eutecticums were also studied (XP 002006154; SU 510-448 A).

Although many different systems were explored and proposed to the art, porcelain enamels for aluminium alloys surfaces always remained as "sensible" to aggressive chemical environments. More precisely, if an aluminium porcelain enamel exhibits rather good resistance to cold acids solutions, evaluated for example according to the standard ISO 2722, all compositions demonstrate bad performances when tested under "hot" conditions. For example against:
- hot citric acid according to the standard ISO 2742,
- Hot water (90°C) and water vapor according to the standard ISO 2744
- Alkaline environment according to the standard ISO 4533 It's even possible to get full decomposition of the porcelain enamel coating under such conditions.

Within the last 5 years, particular corrosion of aluminium porcelain enamels was also observed when enameled pots and pans were cleaned after cooking, in automatic dishwashers. Using old phosphate based cleaners, with high silicate content FR 2.132.802 A, no corrosion was observed, even on such sensitive porcelain enamels like the ones for aluminium.

The introduction on the market of low alkaline detergents which compositions are described in many different patents (Glastech. Ber. 61 (1988)n°9; WO 95/29220; WO 96/01308), known as "low alkaline-low pH" compositions. Different systems were proposed to avoid corrosion of glass articles and composition used for the decoration of glass (SÖFW Journal, 119 Jahrgang 4/93, p208; Proceedings of 39^{th} International Detergency Conference, p 167-172; SÖFW Journal, 122, 398, 1996). But these solutions are not efficient when aluminium porcelain enamel is concerned.

Thus, compositions are needed for use in forming either an adherent, glossy porcelain enamel applied onto aluminium alloys surfaces, or a high glossy, high transparent porcelain enamel used as covercoat onto conventional porcelain enamels of the prior art, with increased chemical resistance simultaneously against alkaline environment, acid environment, hot water and water vapor, better than the same related from composition of the prior art.

### Summary of the invention

The present invention is directed to a chemical composition providing very high chemical resistance when used either directly onto aluminium alloys surface or as covercoat applied onto conventional porcelain enamel for the enamelling of aluminium alloys surfaces. The composition includes a glass component and optional mill additions commonly used by the artisan. The glass component contains, preferably consists of, by weight % of about 17.5% to about 33.5% SiO₂, about 8.5 to about 25.5% TiO₂, about 5 to about 57.5% Bi₂O₃, about 0 to about 13% BaO, about 8 to about 26.5 % Na₂O, about 1.5 to about 11.5% K₂O, about 0 to about 2.5% Sb₂O₃, about 1 to about 2.5% Li₂O, about 0 to about 1% Al₂O₃, about 0 to about 5% B₂O₃, about 0 to about 2.5% F₂, about 0 to about 2% MoO₃, about 0 to about 2.5% P₂O₅, about 0 to about 5% SnO₂, about 0 to about 2.6% SrO, about 0 to about 9% V₂O₅, about 0 to about 5% CuO, about 0 to about 5 % Fe₂O₃, about 0 to about 5 % NiO, about 0 to about 5 % MnO₂, about 0 to about 2.5 % ZrO₂ and about 0 to about 5 % CoO. This glass component may comprise one or more glass frits so as to provide the full composition.

It was found that particular compositions containing Bi₂O₃ as glass network former, especially designed for the direct use onto aluminium alloys surfaces or as covercoat onto conventional compositions as described in the prior art exhibit excellent chemical resistances, in particular from 5 to 10 times better than conventional ones, evaluated according to specific tests or ISO standards established for porcelain enamel coating.

The foregoing and other features of the invention are hereinafter more fully described and particularly pointed out in the claims, the following description setting in detail a few embodiments of the invention, these being however just indicative ones.

### Detailed description

The porcelain enamel composition of the present invention is particularly well suited for use on aluminium alloys or aluminized steel typically used in the automotive, appliance, cookware, building material, and all kind of applications where the porcelain enamel surface is used in hot and chemical aggressive environments like acidic, alkalines, water vapor, hot water etc.

The preferred porcelain enamel composition of the present invention comprises, more preferably consists of, from about 80 to 99% by weight of the following glass components mentioned in Table 1.

**Table 1:**

| OXIDE | WEIGHT % MIN-MAX | |
|---|---|---|
| Al₂O₃ | 0 | 1 |
| B₂O₃ | 0 | 3.5 |
| Bi₂O₃ | 15 | 30 |
| BaO | 2.5 | 13 |
| F₂ | 0 | 2.5 |
| K₂O | 1.5 | 11.3 |
| Li₂O | 1 | 2.2 |
| MoO₃ | 0 | 2 |
| Na₂O | 9 | 26.5 |
| P₂O₅ | 0 | 2.5 |
| SiO₂ | 17.7 | 32.5 |
| SnO₂ | 0 | 5 |
| SrO | 0 | 2.5 |
| TiO₂ | 8.6 | 25.5 |
| V₂O₅ | 0 | 9 |
| Sb₂O₃ | 1.7 | 2.2 |
| CuO | 0 | 3 |
| Fe₂O₃ | 0 | 3 |
| NiO | 0 | 3 |
| MnO₂ | 0 | 3 |
| ZrO₂ | 0 | 3 |
| CoO | 0 | 3 |
| Fe₂O₃+CuO+Cr₂O₃+NiO+CoO+MnO₂ | 0 | 15 |

The table above should be understood twice, i.e. as a combination of all oxides in one single composition and furthermore as disclosing independent lines of preferred oxides to be substituted in a porcelain enamel composition according to the summary of the invention by narrowing specific ranges of the composition.

This glass component may be obtained by conventional glass melting techniques known to the artisan. For example, selected oxides in powder form are mixed together, introduced into a crucible and fused at about 1150°C-1250°C during 20-30 minutes. The molten glass formed in the crucible is then quenched either between two water-cooled rolls, or directly into water.

The porcelain enamel composition according to the present invention is suitable for application onto aluminium alloys surface using all conventional techniques such as dry or wet application processes. Wet spraying, dipping or flow coating can be used.

This glass frit component may be used in combination with various mill additives. A mill additive has to be understood first of all as additives grinded together with an enamel frit, able to assume suspension in water, pH control of the slip, improvement of the glossyness etc. as described in the prior art (Handbook for Bayer Enamel; Dietzel, die Emaillierung). These are for example (non limitative list) boric acid, sodium or potassium silicate, potassium hydroxide, fume silica. At second, the ingredients suitable to produce opacified and/or colored enamels after firing, means titanium dioxide, zirconium silicate, zinc or tin oxide, as well as all kind of mineral pigments here are to be considered. For the wet application process, the glass frits may be grinded together with other mineral additives like boric acid, alkaline silicates, sodium or potassium hydroxide, sodium molybdate, quartz, fume silica etc. according to the state of the art to produce a suitable composition. Also it will be possible to use the same with one or more pigments, coloring agents or opacifiers, the purpose being to produce colored or opacified vitrified layers after firing.

The resulting milled porcelain enamel provides a coarseness of less than 1% ( weight) over a 43 µm sieve.

Whether applied by the dry or wet process the coating composition may be applied at a rate able to result after firing in coatings of about 5 to 90 µm thickness.

Articles coated with the coating compositions of in the invention may be fired in a conventional furnace , at a temperature in a range of about 520 to 600°C, preferably 560 to 580°C, during about 4 to about 10 minutes.

Products coated with particular compositions as described in the invention exhibit after firing smooth and glossy surface, being free of defect, and with increased chemical resistance when evaluated by specific tests as described above as well established ISO standards related to the art.

### Examples:

### Evaluation Procedure

After firing, the resistance of the porcelain enamel coatings were evaluated using well-established ISO standards as well as specific tests. The term "specific tests" refers to conventional ISO standards related to porcelain enamels commonly applied onto steel surfaces which conditions were adapted to give representative image of the resistance of the porcelain enamels for aluminium. It's in fact impossible to use standard tests conditions established for porcelain enamels applied on steel substrate and fired at 820°C for testing much softer compositions, i.e. porcelain enamels for aluminium. These experiences enhance generally almost complete elimination of the porcelain enamel coating. The main tests procedure used were modified as mentioned in Table 2.

**Table 2:**

| | PORCELAIN ENAMELS FOR STEEL STANDARD CONDITION | PORCELAIN ENAMELS FOR ALUMINIUM MODIFIED CONDITIONS |
|---|---|---|
| ISO 2722 | Citric acid 10% solution, 15 minutes - room temperature | Unchanged |
| ISO 2742 | Citric acid 6% solution, 2h 30 minutes-boiling | Time reduced to 30 minutes |
| ISO 2744 | Water Vapor 48 h | Time reduced to 6 h |
| ISO 4533 | Alkaline solution 95°C, 24 h | Time reduced to 6 h |

In the text below, reference to modified conditions are specified under * : ex ISO 2742*

To the tests described, a specific one as described hereinafter was added in order to get fast evaluation of the resistance of porcelain enamels for aluminium to dishwasher cleaners. On a Bayer lantern as described in the standard ISO 4535, enameled plates were tested using a conventional dishwasher cleaner (Calgonit® Compact, Henkel Company). One tab was dissolved into 5 liters demineralized water. The system settled at 65°C, during 6 hours. The weight loss of the enameled aluminium sheet in contact with the Calgonit solution was measured.

Results obtained on well-known existing products according to the prior art

Testing conventional porcelain enamels from the Pemco catalog, manufactured by Email Brugge NV, disclosed in DE 21 19 777 C, the following weight losses according to the tests mentioned above in g/ m², were obtained. The results can be found in Table 3.

**Table 3:**

| | ISO 2722 | ISO 2742* | ISO 4533* | ISO2744 | CALGONIT |
|---|---|---|---|---|---|
| AT6113 | AA | 39 | 13 | 20 | 4 |
| AT6115 | A | 54 | 21 | 20 | 7 |
| AT6118 | AA | 47 | 25 | 20 | 6 |

100 parts of the enamel frits according to the prior art AT6113, AT6115, AT6118 were grinded into 55 parts water together with 4 parts boric acid, 1 part sodium metasilicate and 1 part potassium hydroxide. The resulting enamel slip was sprayed onto aluminium sheet, so that the resulting enamel layer has a thickness of about 60 µm after firing. The slip was dried at about 70 °C, and then fired at 560 °C during 4 minutes. The enameled sheets were submitted to the tests as described in Table 2 as well as in contact to the Calgonit solution as already described, and the weight losses were measured. Hereafter, in Table 3 the results are given in g/m².

### Examples 1 to 3:

Particular compositions, as described in the table 4, were melted at 1150°C during 30 minutes and then quenched into water. 100 parts of the resulting porcelain enamel frit were mixed with 4 parts boric acid, 1 part sodium disilicate and 1 part potassium hydroxide, 55 parts water, and milled to produce a porcelain enamel slip. This enamel slip was sprayed onto aluminium sheet, dried at about 70°C and fired at 560°C during 4 minutes. The resulting porcelain enamel coating was about 60µm thick. The porcelain enamel surface after firing looks glossy, defect free, and transparent.

**Table 4:**

| WEIGHT% | EX1 | EX2 | EX3 |
|---|---|---|---|
| B₂O₃ | 2,5 | 0 | 2,9 |
| Bi₂O₃ | 25,7 | 25,75 | 17,6 |
| BaO | 2,5 | 8,6 | 0 |
| K₂O | 1,6 | 1,6 | 1,9 |
| Li₂O | 1,2 | 1,1 | 1,3 |
| Na₂O | 20,7 | 19,4 | 24,3 |
| SiO₂ | 26,5 | 25,15 | 30,6 |
| TiO₂ | 19,3 | 18,4 | 21,4 |

Porcelain enameled sheets were tested using the procedures described above. The enamel sheets were submitted to the tests as described in Table 2 as well as leaching by the Calgonit compact solution as described above. Much lower weight losses were found, due to the increase of the chemical resistance brought by the particular frit compositions, as shown in table 5:

**Table 5:**

| weight loss g / m² | ISO 2722 | ISO 2742* | ISO 4533* | ISO 2744* | CALGONIT® |
|---|---|---|---|---|---|
| Example 1 | AA | 10 | 2 | 6 | 1 |
| Example 2 | AA | 18 | 1.5 | 1.5 | 2.5 |
| Example 3 | AA | 12 | 2 | 7.5 | 2 |

### Examples 4 to 8:

Particular compositions, as described in the table below, were melted at 1200°C during 30 minutes and then quenched into water. 100 parts of the resulting porcelain enamel frit were mixed with 4 parts boric acid, 1 part sodium metasilicate, 1 part potassium hydroxide and 55 parts water and milled to produce a porcelain enamel slip. A second porcelain enamel slip was prepared using 100 parts of the AT 6118, manufactured by Pemco Brugge N.V. 4 parts boric acid, 1 part sodium metasilicate, 1 part potassium hydroxide, and described in the patent DE 21 19 777 A, grinded together with the same mill additive, in the same conditions than the examples.

Both slips were associated using the well-known two coats-one fire process. The enamel slip based on the frit AT 6118 being used as base coat onto the aluminium sheet, was covered when still wet by the slip prepared using particular frits of the invention. The resulting coating was dried, later fired at about 580°C during 4 minutes. Both systems were sprayed in order to produce after firing a coating about 60 microns thick, consisting of about 40 µm of the first coat based on AT 6118, and 20 µm of the new compositions.

**Table 6:**

| WEIGHT% | EX4 | EX5 | EX6 | EX7 | EX8 |
|---|---|---|---|---|---|
| B₂O₃ | 2,9 | 3 | 2 | 3,8 | 3 |
| Bi₂O₃ | 11,35 | 11,6 | 7,5 | 10 | 11,4 |
| BaO | 2,9 | 0 | 6,9 | 10,6 | 0 |
| F₂ | 0 | 1,4 | 0 | 0 | 0 |
| K₂O | 1,9 | 2 | 4,95 | 7,25 | 2 |
| Li₂O | 1,4 | 1,4 | 1,4 | 1,35 | 1,4 |
| MoO₃ | 2 | 0 | 0 | 0 | 0 |
| Na₂O | 23,7 | 25,15 | 22,25 | 19,2 | 25,1 |
| SiO₂ | 32,45 | 33,1 | 32,75 | 267,3 | 32,4 |
| TiO₂ | 21,4 | 22,35 | 22,25 | 20,5 | 22,2 |
| ZrO₂ | 0 | 0 | 0 | 0 | 2,5 |

Porcelain enameled sheets were tested as mentioned above. Enameled sheets were tested according to conditions previously described in Table 2, as well as submitted to leaching by the Calgonit solution as described above. Much lower weight losses were found, due to the increase of the chemical resistance brought by the particular frit compositions, as shown in the table 7:

**Table 7:**

| weight loss g/m² | ISO 2722 | ISO 2742* | ISO 4533* | ISO2744* | CALGONIT® |
|---|---|---|---|---|---|
| Example 4 | AA | 7 | 1.5 | 8 | 2 |
| Example 5 | AA | 11 | 3 | 5.5 | 2 |
| Example 6 | AA | 5.5 | 1 | 6 | 1 |
| Example 7 | AA | 11 | 3 | 5.5 | 1 |
| Example 8 | AA | 8 | 2 | 5 | 1.5 |

## Claims

1. Particular compositions for the enamelling of aluminium alloys surfaces, including aluminized steel, containing Bismuth oxide (Bi₂O₃) as glass network former.

2. Compositions according to claim 1 bonded directly onto aluminium surfaces.

3. Compositions according to claim 1 bonded as covercoat onto porcelain enamels the latter bonded onto aluminium surfaces.

4. Compositions according to claim 2 and 3 containing in weight % of about 17.5% to about 33.5% SiO₂, about 8.5 to about 25.5% TiO₂, about 5 to about 57.5% Bi₂O₃, about 0 to about 13% BaO, about 8 to about 26.5 % Na₂O, about 1.5 to about 11.5% K₂O, about 0 to about 2.5% Sb₂O₃, about 1 to about 2.5% Li₂O, about 0 to about 1% Al₂O₃, about 0 to about 5% B₂O₃, about 0 to about 2.5% F₂, about 0 to about 2% MoO₃, about 0 to about 2.5% P₂O₅, about 0 to about 5% SnO₂, about 0 to about 2.6% SrO, about 0 to about 9% V₂O₅, about 0 to about 5% CuO, about 0 to about 5 % Fe₂O₃, about 0 to about 5 % NiO, about 0 to about 5 % MnO₂, about 0 to about 2.5 % ZrO₂ and about 0 to about 5 % CoO.

5. Compositions according to anyone of claims 1 to 4 containing in particular consisting of
| OXIDE | WEIGHT % MIN-MAX | |
|---|---|---|
| Al₂O₃ | 0 | 1 |
| B₂O₃ | 0 | 3.5 |
| Bi₂O₃ | 15 | 30 |
| BaO | 2.5 | 13 |
| F₂ | 0 | 2.5 |
| K₂O | 1.5 | 11.3 |
| Li₂O | 1 | 2.2 |
| MoO₃ | 0 | 2 |
| Na₂O | 9 | 26.5 |
| P₂O₅ | 0 | 2.5 |
| SiO₂ | 17.7 | 32.5 |
| SnO₂ | 0 | 5 |
| SrO | 0 | 2.5 |
| TiO₂ | 8.6 | 25.5 |
| V₂O₅ | 0 | 9 |
| Sb₂O₃ | 1.7 | 2.2 |
| CuO | 0 | 3 |
| Fe₂O₃ | 0 | 3 |
| NiO | 0 | 3 |
| MnO₂ | 0 | 3 |
| ZrO₂ | 0 | 3 |
| CoO | 0 | 3 |
| Fe₂O₃+CuO+Cr₂O₃+NiO+CoO+MnO₂ | 0 | 15 |

6. Compositions according to anyone of claims 1 to 4 containing in weight %: B₂O₃ 2 to 3%; Bi₂O₃ 7 to 12; BaO 0 to 11%; F₂ 0 to 1,5%; K₂O 2 to 7%; Li₂O₁ to 2%; MoO₃ 0 to 2%; Na₂O 8,9 to 25%; P₂O₅; SiO₂ 31 to 33,5%; TiO₂ 20 to 22%.
